(19) Europäisches Patentamt / European Patent Office / Office européen des brevets

(11) **EP 2 237 080 A1**

(12) **DEMANDE DE BREVET EUROPEEN**

(43) Date de publication:
**06.10.2010 Bulletin 2010/40**

(51) Int Cl.:
*G02B 3/00* (2006.01)    *F21S 8/10* (2006.01)
*F21V 5/00* (2006.01)    *F21V 5/04* (2006.01)
*G02B 19/00* (2006.01)    *G02B 27/30* (2006.01)

(21) Numéro de dépôt: **10157754.2**

(22) Date de dépôt: **25.03.2010**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA ME RS**

(30) Priorité: **31.03.2009  FR 0901596**

(71) Demandeur: **Valeo Vision**
**93012 Bobigny Cedex (FR)**

(72) Inventeur: **Albou, Pierre**
**75013, PARIS (FR)**

(54) **Lentille pour module d'éclairage  pour projecteur de véhicule**

(57)    Lentille (L) pour module d'éclairage pour projecteur de véhicule automobile comportant:
- une face de sortie (3) à facettes (4a...6c),
- une face d'entrée (E), chaque facette de sortie (4a... 6c) étant associée à une surface d'entrée (E4a ... E6a) de la face d'entrée (E).

Chaque lentille partielle formée par une facette de sortie et sa surface d'entrée associée admet un foyer (F) et transforme les surfaces d'ondes sphériques admettant ce foyer (F) pour centre en une surface d'onde de sortie plane pouvant être distincte pour chaque lentille partielle, le foyer (F) étant identique pour toutes les facettes de sortie.

FIG.1

**Description**

L'invention est relative à un module d'éclairage pour projecteur de véhicule automobile comportant une lentille et une source lumineuse formée par une diode électroluminescente à plusieurs puces alignées suivant une direction horizontale, les puces voisines se succédant d'un pas et étant séparées par des bandes verticales n'émettant pas de lumière.

L'invention concerne plus particulièrement, mais non exclusivement, un module d'éclairage pour donner un spot de faisceau route.

Une diode luminescente, également appelée LED, à plusieurs puces séparées par des bandes n'émettant pas de lumière crée un défaut d'homogénéité dans le faisceau produit.

L'invention a pour but, surtout, d'obtenir un faisceau lumineux de bonne performance et homogène, malgré les séparations existant entre les puces de la diode électroluminescente, notamment dans le cas d'un spot de faisceau route. Il est souhaitable en outre que la surface de sortie de la lentille présente un aspect attrayant.

FR-A-2 765 312 a proposé un feu de signalisation comportant une source lumineuse constituée par un filament, et un écran intermédiaire avec une série de cellules optiques comportant chacune, sur une face intérieure une surface courbe de redressement et d'étalement de la lumière, et sur une face extérieure un ensemble d'au moins deux facettes planes obliques. L'écran intermédiaire se trouve derrière une glace qui limite l'effet produit. En outre, la répartition d'un feu de signalisation ne correspond pas à celle souhaitée pour un spot de faisceau route, et la source de lumière est différente de celle constituée par une diode multipuce.

L'invention a pour but, surtout, de fournir un module d'éclairage, notamment pour donner un spot de faisceau route, performant et homogène, avec comme source lumineuse une LED multipuce.

L'objet selon l'invention, est ainsi une lentille pour module d'éclairage pour projecteur de véhicule automobile comportant:

- une face de sortie à facettes situées dans des plans orientés différemment,
- une face d'entrée, chaque facette de sortie étant associée à une surface d'entrée de la face d'entrée, la forme de chaque surface d'entrée étant telle que chaque lentille partielle formée par une facette de sortie et sa surface d'entrée associée admet un foyer et transforme les surfaces d'ondes sphériques admettant ce foyer (F) pour centre en une surface d'onde de sortie plane pouvant être distincte pour chaque lentille partielle, le foyer étant identique pour toutes les facettes de sortie.

En d'autres termes, dans la lentille selon la présente invention chaque facette de sortie est associée une surface d'entrée de la face d'entrée de la lentille, cette surface d'entrée associée à la facette de sortie étant calculée de sorte que chaque lentille partielle formée par une facette de sortie et sa surface d'entrée associée soit stigmatique entre un foyer, identique pour toutes les facettes et situé au voisinage du centre de la source lumineuse, et un point à l'infini, éventuellement distinct entre différentes lentilles partielles. De préférence, la lentille selon l'invention est une lentille de module d'éclairage de projecteur de véhicule automobile.

La lentille et le module selon l'invention présente un aspect de pierre précieuse tout en permettant d'obtenir un spot de bonne performance grâce à un multiplexage des images produites par les différentes lentilles partielles. Ceci permet de supprimer ou de réduire les zones non éclairées correspondant aux bandes séparant les puces d'une LED.

Généralement, la face de sortie de la lentille comporte une facette centrale orthogonale à l'axe optique du module et le point central de la facette centrale constitue le point de passage des surfaces d'onde de sortie.

Préférentiellement dans la lentille selon la présente invention, le chemin optique entre le foyer et la surface d'onde correspondante est identique pour chaque lentille partielle, les surfaces d'onde de sortie de chacune des lentilles partielles passant par un même point. Préférentiellement, la face de sortie de ladite lentille comporte une facette centrale orthogonale à l'axe optique du module et le point central de la facette centrale constitue le point de passage des surfaces d'onde de sortie. Préférentiellement, la forme de chaque surface d'entrée est telle que lesdites surfaces d'onde de sortie planes sont contenues dans des plans verticaux. Ainsi la surface de la face d'entrée de la lentille, correspondant à l'enveloppe extérieure recouvrant les différentes faces d'entrées, s'approche d'une surface de sortie lisse, permettant ainsi de minimiser la présence de rayons parasites.

Préférentiellement, la forme de chaque surface d'entrée permet d'obtenir des surfaces d'onde de sortie planes telles que l'image du foyer par chaque lentille partielle se situe à l'infini et certaines de ces images du foyer sont décalées horizontalement. Ainsi lorsqu'une source lumineuse est placée au foyer de la lentille selon la présente invention, l'homogénéité de la tâche lumineuse produite est améliorée.

Selon un mode de réalisation particulièrement avantageux, la lentille présente une facette de sortie centrale, les autres facettes de sortie se répartissant autour de la facette de sortie centrale. Ces autres facettes de sortie sont inclinées vers l'arrière en partant de leur point le plus proche de la facette de sortie, le foyer et la lentille étant agencés d'arrière en avant.

Préférentiellement, l'image du foyer par une lentille partielle autre que la lentille partielle centrale est décalée, par rapport à l'image du foyer par la lentille partielle centrale, selon la même direction que le décalage du vecteur de la normale à la facette de sortie de la lentille partielle correspondante par rapport au vecteur de la normale à la facette de sortie centrale. Par exemple, si la normale à la facette est décalée vers la gauche, par rapport à une direction d'arrière en avant, et que l'on place une source lumineuse au foyer de la lentille, l'image de la source sera décalée vers la gauche. Avec ces caractéristiques, la courbure de la partie correspondante de la face d'entrée est ainsi diminuée. L'application de ces caractéristiques aux facettes de sortie de la lentille selon la présente invention, préférentiellement pour les facettes situées au bord de la face de sortie de la lentille selon la présente invention, permet de minimiser l'épaisseur globale de la lentille selon la présente invention.

La présente invention a également pour objet un module d'éclairage pour véhicule automobile comprenant une lentille selon la présente invention.

Selon une variante de réalisation du module d'éclairage, la forme de chaque surface d'entrée de la lentille est telle que lesdites surfaces d'onde de sortie planes sont contenues dans des plans verticaux.

Préférentiellement, ce module d'éclairage comprend également une source lumineuse formée par une diode électroluminescente à plusieurs puces alignées suivant une direction horizontale, les puces voisines se succédant d'un pas et étant séparées par des bandes verticales n'émettant pas de lumière, ledit foyer étant situé environ au centre de la source lumineuse. Par « puce », on entend l'élément semi-conducteur de la diode électroluminescente qui, lorsqu'il est alimenté en courant électrique, émet de la lumière.

De préférence, les lentilles partielles de la lentille de ce module d'éclairage sont prévues pour donner des images entrelacées de la source lumineuse. Préférentiellement, la forme de chaque surface d'entrée permet d'obtenir des surfaces d'onde de sortie planes telles que l'image du foyer par chaque lentille partielle correspondante se situe à l'infini et certaines des images du foyer associées à l'ensemble des lentilles partielles sont décalées, de sorte que les lentilles partielles donnent des images entrelacées de la source lumineuse. Ainsi cela permet d'avoir un faisceau sans baisse d'intensité ou bandes noires, qui correspondraient aux bandes verticales séparant chaque puce. Le faisceau lumineux émis par le module d'éclairage est ainsi homogène, même en utilisant une source lumineuse à plusieurs puces.

Les images entrelacées superposées sont avantageusement décalées d'une valeur donnée par la formule suivante :

$$\pm (k.p/2 - \varepsilon)$$

où :

- « p » correspond à la distance angulaire entre les centres des images à l'infini des puces par la lentille partielle centrale,
- « k » est un nombre entier et $\varepsilon < p/2$,
- $\varepsilon$ correspond à un décalage supplémentaire, pouvant varier pour des images résultant de lentilles partielles différentes.

Préférentiellement, les images entrelacées de la source lumineuse sont décalées horizontalement. Préférentiellement, pour obtenir un faisceau plus étalé en largeur, les images entrelacées de la source lumineuses sont décalées uniquement horizontalement.

Préférentiellement, le spot lumineux résultant de la superposition de l'ensemble des images entrelacées de la source lumineuse est un spot de faisceau route.

Préférentiellement le module d'éclairage selon la présente invention comprend un système optique supplémentaire situé derrière la lentille, objet de la présente invention. Ce système optique supplémentaire est replié à l'aide d'un dispositif réfléchissant pour réduire l'encombrement de l'ensemble suivant la direction de l'axe optique. Préférentiellement, le dispositif réfléchissant est constitué par un miroir plan, incliné sur l'axe optique.

Préférentiellement, un cache est prévu au-dessus de la source pour arrêter la lumière montante susceptible d'être gênante.

Un autre objet de la présente invention est un projecteur de véhicule automobile comportant au moins un module selon la présente invention.

L'invention a également pour objet un véhicule comprenant un projecteur de véhicule selon la présente invention.

Avantageusement, les points à l'infini sont choisis de manière à imager la source lumineuse à l'infini avec uniquement un décalage angulaire horizontal, éventuellement nul, entre le centre de l'image et l'axe du véhicule, et de manière à entrelacer les images de la source à l'infini afin d'améliorer l'homogénéité et d'augmenter la largeur du spot sans l'épaissir, tout en maintenant la valeur de l'intensité maximale, placée de préférence dans l'axe, pratiquement égale à la valeur qui serait obtenue avec une lentille purement stigmatique.

Le module d'éclairage peut comporter un système optique situé derrière la lentille qui est replié à l'aide d'un dispositif réfléchissant pour réduire l'encombrement de l'ensemble suivant la direction de l'axe optique. Le dispositif réfléchissant est avantageusement constitué par un miroir plan, incliné sur l'axe optique. Un cache peut être prévu au-dessus de la source pour arrêter la lumière montante susceptible d'être gênante, le cache étant visible de dessus et étant traité de manière décorative.

L'invention est également relative à un projecteur lumineux de véhicule automobile comportant au moins un module tel que défini précédemment.

L'invention consiste, mises à part les dispositions exposées ci-dessus, en un certain nombre d'autres dispositions dont il sera plus explicitement question ci-après à propos d'exemples de réalisation décrits avec références aux dessins annexés, mais qui ne sont nullement limitatifs. Sur ces dessins :

Fig. 1 est une vue en perspective de l'avant, côté droit, de la lentille d'un module selon l'invention, et de la source lumineuse schématisée.

Fig. 2 est une vue schématique en élévation de l'image d'une LED à cinq puces alignées horizontalement.

Fig. 3 est une vue schématique des images obtenues par un multiplexage simple, avec trois lentilles partielles, des puces de la LED de Fig. 2, les images étant décalées horizontalement d'un demi-pas p/2 et, pour la clarté de la représentation, verticalement.

Fig. 4 montre, semblablement à Fig. 3, les images obtenues avec trois lentilles partielles pour un décalage horizontal différent de $\pm$ (p - $\varepsilon$)..

Fig. 5 est une coupe schématique horizontale de la lentille.

Fig. 6 est une représentation des courbes isolux obtenues à partir des cinq puces de la LED avec la facette centrale de la lentille.

Fig. 7 est un réseau de courbes isolux obtenues à partir des cinq puces de la LED avec les différentes lentilles partielles correspondant aux différentes facettes de la lentille, et

Fig. 8 est une coupe schématique verticale d'une réalisation avec miroir de repli pour limiter l'encombrement de l'ensemble optique suivant la direction de l'axe optique de la lentille.

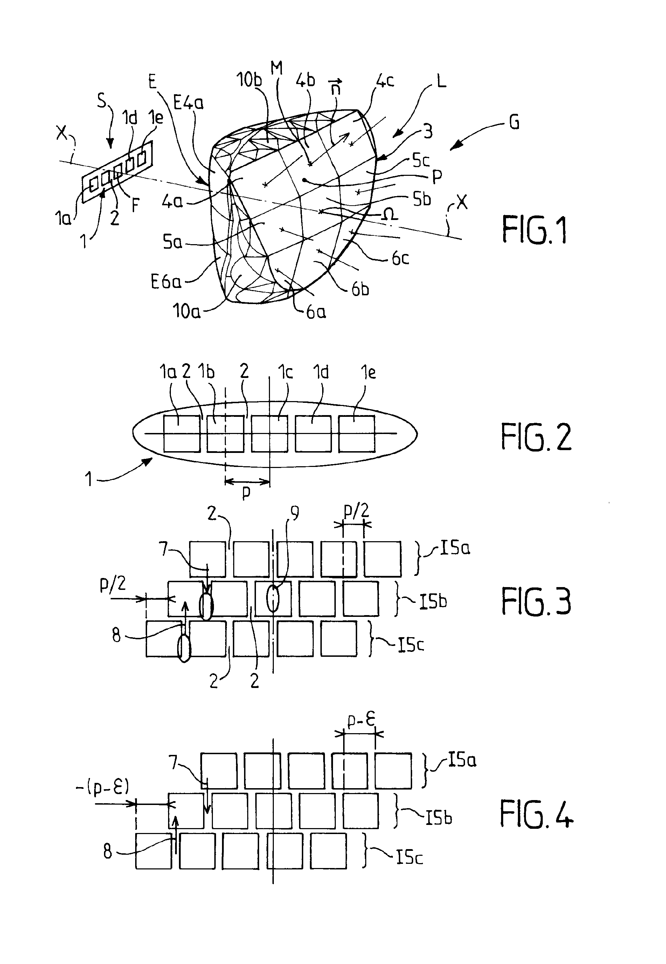

En se reportant à Fig. 1 des dessins, on peut voir, schématiquement représenté, un module d'éclairage G pour projecteur de véhicule automobile, en particulier pour donner un spot de faisceau route. Ce module G comporte une lentille L et une source lumineuse S formée par une diode électroluminescente 1, également dénommée LED, à plusieurs puces 1a, 1b... 1e (Fig. 1), alignées suivant une direction horizontale lorsque le module G occupe sa position normale dans le véhicule. Selon l'exemple de Fig. 1, la LED 1 est composée de cinq puces élémentaires 1a... 1e de forme carrée, toutes alignées sur un support. Fig.2 donne l'image à l'infini de ces puces. D'autres dispositions sont possibles, par exemple avec des puces disposées suivant plusieurs rangées superposées parallèles, les puces d'une même rangée étant alignées.

Les puces voisines se succèdent selon un pas proportionnel à la tangente de p et sont séparées par des bandes verticales 2 qui n'émettent pas de lumière.

La lentille L présente une face de sortie 3 à facettes 4a, 4b, 4c, 5a, 5b, 5c, 6a, 6b, 6c situées dans des plans orientés différemment, lui donnant l'aspect d'une pierre précieuse.

Selon l'exemple représenté sur Fig. 1, la face de sortie 3 comporte trois zones transversales de facettes décalées verticalement, et, dans chaque zone, trois facettes orientées différemment. Bien entendu, un nombre différent de zones et de facettes est possible. La zone médiane formée par les facettes 5a, 5b, 5c, comporte une facette centrale 5b située dans un plan vertical, orthogonal à l'axe optique X-X de la lentille, lequel axe optique est parallèle à l'axe longitudinal du véhicule. Les facettes latérales 5a, 5c sont inclinées vers l'arrière par rapport à la facette centrale 5b.

Les facettes médianes 4b, 6b situées respectivement au-dessus et au-dessous de la facette centrale 5b sont inclinées vers l'arrière par rapport à la facette 5b.

Les facettes latérales 4a, 4c, et 6a, 6c sont inclinées vers l'arrière par rapport à leurs facettes médianes respectives 4b, 6b.

Les normales aux centres des facettes sont représentées sur Fig.1.

Les termes "avant" et "arrière" sont à comprendre suivant le sens de propagation de la lumière qui provient de la source S et qui se dirige vers l'avant.

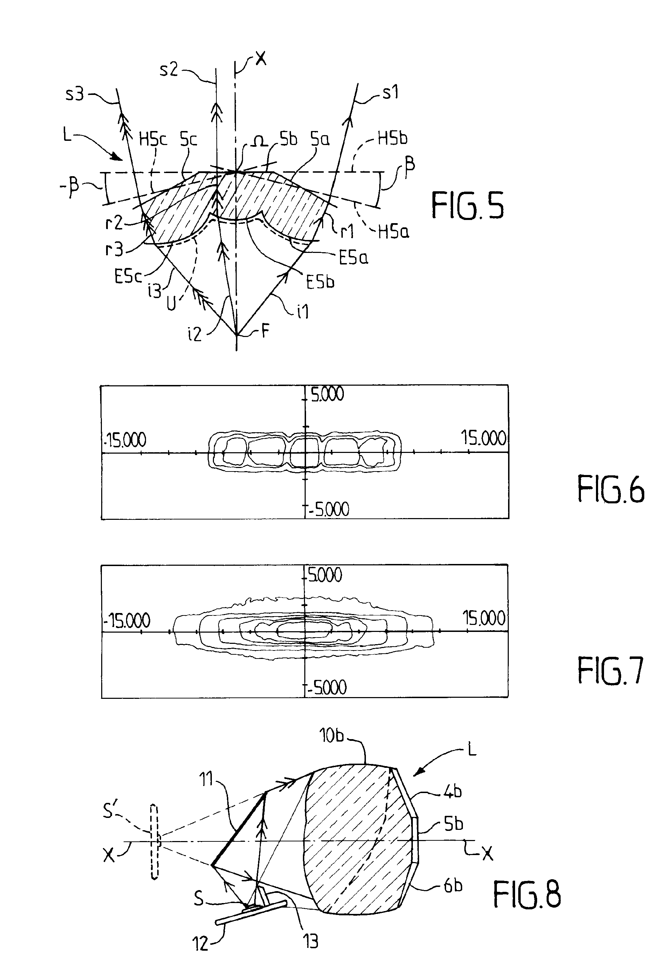

Pour chaque facette de sortie on calcule une surface d'entrée E4a, E5a, E5b, E5c... E6a... de sorte que la forme de chaque surface d'entrée est telle que chaque lentille partielle formée par une facette de sortie et sa surface d'entrée associée admet un foyer F et transforme les surfaces d'ondes sphériques admettant ce foyer F pour centre en une surface d'onde plane, le foyer F étant identique pour toutes les facettes de sortie. Ainsi chaque lentille partielle formée par une facette de sortie 4a, 5a, 5b, 5c ... 6a et sa surface d'entrée associée E4a, E5b, E5c... E6a... est stigmatique entre le foyer F (Fig.5) et un point à l'infini. La source lumineuse est positionnée dans le module d'éclairage tel que ce foyer soit situé au voisinage du centre de la source lumineuse S.

Sur Fig. 5, qui est une coupe schématique horizontale de la lentille L au niveau de sa zone moyenne 5a, 5b, 5c, les surfaces d'onde planes H5a, H5b, H5c utilisées pour calculer les trois lentilles partielles sont représentées par leurs traces rectilignes en tirets, sur le plan de coupe.

Toutes les surfaces d'onde de sortie planes utilisées pour le calcul sont verticales et passent par un même point $\Omega$, avantageusement situé au centre de la facette centrale 5b, et le chemin optique entre le foyer F et la surface d'onde correspondante est identique pour chaque lentille partielle calculée.

Ces conditions assurent que l'enveloppe extérieure U (Fig. 5) des différentes surfaces d'entrée E4a... E6c est la plus proche possible d'une surface d'entrée lisse unique et que, pour chaque facette de sortie considérée séparément, la surface d'entrée globale U se comporte quasiment comme une partie de la surface spécifique à la facette, ce qui permet d'éviter des parasites fâcheux. Toutefois, la surface d'entrée lisse U présente nécessairement des arêtes du moment qu'il existe dans le système au moins deux surfaces d'onde de sortie différentes ou deux facettes contenues dans des plans non confondus.

Une autre conséquence des conditions exposées précédemment est que la taille angulaire des images de la source est quasiment indépendante de la facette de sortie considérée.

Le choix des surfaces d'onde planes est effectué, de préférence, de sorte à imager la source S à l'infini avec uniquement un décalage angulaire horizontal, éventuellement nul, entre le centre de l'image et l'axe du véhicule. Les images de la source à l'infini sont entrelacées afin d'améliorer l'homogénéité et d'augmenter la largeur du spot sans l'épaissir, tout en maintenant la valeur de l'intensité maximale, placée de préférence dans l'axe, pratiquement égale à la valeur qui serait obtenue avec une lentille purement stigmatique entre le foyer F et un unique point à l'infini.

Le principe d'entrelacement est expliqué avec référence aux Fig. 2 à 4. Fig. 2 représente l'image de la LED qui serait obtenue avec des surfaces d'entrée stigmatiques entre le foyer F et une même surface d'onde plane de sortie perpendiculaire à l'axe optique du système, pour toutes les facettes de la face de sortie. Dans ce cas, les images produites par les différentes lentilles partielles se superposeraient pratiquement exactement de sorte que les bandes 2 seraient superposées et provoqueraient des inhomogénéités dans le faisceau.

Fig. 3 illustre les images I5a, I5b, I5c obtenues avec les lentilles partielles correspondant aux facettes 5a, 5b, 5c, ces images étant décalées verticalement pour faciliter la lecture du dessin. En réalité ces images se recouvrent, comme l'indiquent les flèches 7, 8.

L'image I5a de la source S est décalée vers la droite par rapport à l'image I5b donnée par la facette centrale tandis que l'image I5c, donnée par la facette 5c est décalée vers la gauche. L'exemple de Fig. 3 correspond à un multiplexage simple avec un décalage d'un demi-pas p/2 entre les images. Il apparaît que lorsque les images I5a, I5b, I5c se recouvrent, comme dans la réalité, les images des bandes 2 sont couvertes par des zones éclairées d'au moins l'une des autres images de sorte que l'homogénéité de l'image globale est améliorée. On peut noter que dans la zone centrale 9 de l'image I5b, les intensités lumineuses des images I5a et I5c ne s'additionnent pas.

Pour améliorer encore l'homogénéité du spot lumineux, et assurer une intensité dans l'axe XX maximale, on prévoit un multiplexage tel qu'illustré sur Fig. 4 avec un décalage des différentes images d'une valeur donnée par la formule suivante :

$$\pm (k.p/2 - \varepsilon)$$

où :

- « p » correspond à la distance angulaire entre les centres des images à l'infini des puces par la lentille partielle centrale,
- « k » est un nombre entier et $\varepsilon < p/2$,
- $\varepsilon$ correspond à un décalage supplémentaire, pouvant varier pour des images résultant de lentilles partielles différentes.

On observe sur la figure 4, que pour chacune des images I5a, I5b et I5c, l'image d'une puce est sur la zone centrale. Cette zone centrale est matérialisée sur la figure 4 par le trait vertical coupant l'image de la deuxième puce en partant de la gauche de l'image I5a, l'image de la troisième puce en partant de la gauche de l'image I5b et l'image de la quatrième puce en partant de la gauche de l'image I5c.

Dans l'exemple de Fig.4, k=2.

Le choix du signe du décalage latéral dépend de la composante horizontale de la normale à la facette considérée.

En choisissant un décalage du même côté que le vecteur normal à la facette, on minimise la courbure de la partie correspondante de la face d'entrée. Un tel choix est particulièrement judicieux pour les facettes situées au bord de la face de sortie puisqu'il permet de minimiser l'épaisseur globale de la lentille L.

Les angles ± β (Fig.5) formés entre les surfaces d'onde planes telles que H5a et H5c, avec la surface frontale H5b sont déterminés pour assurer les multiplexages illustrés sur Fig. 3 ou 4.

La lentille L comporte sur ses bords latéraux ainsi que sur sa face supérieure des facettes décoratives 10a, 10b, qui n'interviennent pas dans la production du faisceau recherché.

Comme visible sur Fig.5, un rayon lumineux i1 provenant du foyer F et tombant sur la face d'entrée E5a est réfracté, dans la matière de la lentille L, selon un rayon r1 qui, en traversant la face de sortie 5a est réfracté dans l'air pour donner un rayon sortant s1 orthogonal au plan de la surface d'onde H5a. Ce rayon s1 forme un angle β avec la direction de l'axe optique X-X de la lentille.

Un rayon i2 provenant du foyer F et tombant sur la face d'entrée E5b est réfracté, à l'intérieur de la lentille L, suivant un rayon r2 orthogonal à la surface d'onde H5b et donc parallèle à l'axe optique. Ce rayon r2 traverse la face de sortie 5b sans être dévié pour donner le rayon sortant s2.

Un rayon lumineux i3 provenant de F et tombant sur la face d'entrée E5c est réfracté selon un rayon r3 et sort de la face 5c suivant un rayon s3 orthogonal à la surface d'onde H5c, qui forme un angle - β avec la direction de l'axe optique.

La lentille partielle formée par la face de sortie 5a et la face d'entrée E5a donne en sortie un faisceau parallèle, horizontal, incliné de l'angle β sur l'axe optique et correspondant à l'image I5a de Fig. 3, non décalée verticalement. Le faisceau parallèle horizontal donné par la lentille partielle centrale 5b-E5b correspond à l'image I5b de Fig. 3 ou 4, tandis que le faisceau parallèle horizontal donné par la lentille partielle 5c-E5c, forme un angle - β avec l'axe optique, et correspond à l'image I5c de Fig. 3 ou 4 sans décalage vertical.

Fig. 6 représente les courbes isolux obtenues sur un écran situé généralement à une distance de 25 m du module, c'est-à-dire à l'infini, avec la facette centrale 5b de la lentille. Cette courbe correspond à une courbe isolux telle qu'elle serait obtenue avec une lentille simple stigmatique entre F et un unique point à l'infini. Le contour des courbes isolux reproduit sensiblement le contour des cinq puces de la LED. Ce faisceau présente un manque d'homogénéité, notamment au niveau des bandes séparant les différentes puces. Les courbes isolux sont centrées sur l'axe optique, la lentille partielle centrale, comme expliqué à propos de Fig. 5, ne créant pas de déviation angulaire.

Fig. 7 donne les courbes isolux obtenues avec la lentille complète, c'est-à-dire avec la superposition des courbes isolux produites par les différentes lentilles partielles. Seule la facette centrale 5b donne une image centrée. Les courbes isolux sont étalées à droite et à gauche du fait des images déviées angulairement par les lentilles partielles latérales. La superposition des images obtenues permet d'améliorer l'homogénéité du réseau de courbes isolux de Fig. 7 dans lequel le contour des différentes puces n'apparaît plus. Dans l'exemple de Fig. 6, le pas entre les puces élémentaires, exprimé sous forme angulaire, est de 0,808˚. La lentille correspondant à Fig. 7 a été obtenue avec ε = 0,092˚, et k = 2 .

En coupe verticale parallèle à l'axe optique, la lentille L est prévue pour donner, à partir des différentes lentilles partielles, des faisceaux sortants parallèles horizontaux de telle sorte que la hauteur est la même pour les différentes images données.

Les lentilles conçues pour donner un spot de faisceau longue portée ont un tirage élevé, de 39,4 mm dans l'exemple correspondant aux Fig. 6 et 7, ce qui correspond à un système de profondeur importante pour le module envisagé, donc difficile à implanter dans un projecteur.

Pour pallier cet inconvénient, on prévoit de replier le système optique, comme illustré sur Fig. 9, à l'aide d'un miroir plan 11 incliné sur l'horizontale. La source S peut alors être disposée, avec son support 12, en partie basse sensiblement au voisinage de la lentille L. L'inclinaison du miroir 11 et la disposition de la source S sont telles que l'image S' de la source donnée par le miroir soit dans un plan vertical orthogonal à l'axe optique X-X en arrière du miroir 11, et centrée sur l'axe optique. La source S' constitue une source virtuelle d'où semblent provenir les rayons lumineux qui tombent sur la face d'entrée de la lentille L.

Un cache 13 formé par une plaque orthogonale au support 12 de la source S peut être prévu pour arrêter les rayons lumineux gênants qui proviendraient de la source S et tomberaient directement sur la face d'entrée de la lentille L. Il s'agit essentiellement d'une lumière montante. Dans la mesure où cette lumière montante n'est pas gênante, par exemple si elle passe essentiellement à travers les facettes décoratives supérieures 10b, le cache 13 peut être supprimé.

Lorsque le cache 13 est prévu, il est visible d'en haut, à travers la face supérieure 10b de la lentille. Le cache 13 devient alors une pièce de style dont l'aspect peut être étudié et soigné.

Le module selon l'invention permet d'obtenir un faisceau lumineux homogène, large, et non dilaté verticalement.

La fonction lumineuse envisagée dans la description est une fonction spot de faisceau route. Cette application n'est pas limitative et d'autres fonctions sont possibles, notamment faisceau à coupure.

L'invention permet d'éviter des traces sombres superposées, ainsi qu'une trace noire au point central du faisceau.

**Exemple de calcul de la lentille L**

Un exemple de calcul de lentille L est donné ci-après. Soit $\vec{n}$ le vecteur unitaire normal à une facette en un point M (voir Fig.1)

Soit $\vec{v}$ un vecteur unitaire situé dans le plan de la facette.

Les composantes du vecteur $\vec{v}$ suivant un repère orthonormé sont

$$\vec{v} = \frac{1}{\sqrt{2}} \begin{pmatrix} \cos \alpha \\ \sin \alpha \\ 1 \end{pmatrix}$$

Les vecteurs $\vec{v}$ et $\vec{n}$ sont orthogonaux, d'où

$$\vec{v} \cdot \vec{n} = 0 \quad \Rightarrow n_x \cos \alpha + n_y \sin \alpha = -n_z$$

$$\Rightarrow \underbrace{\frac{n_x}{\sqrt{n_x^2 + n_y^2}}}_{\sin \alpha'} \cos \alpha + \underbrace{\frac{n_y}{\sqrt{n_x^2 + n_y^2}}}_{\cos \alpha'} \sin \alpha = \frac{-n_z}{\sqrt{n_x^2 + n_y^2}}$$

$$\underbrace{\phantom{xxxxxxxxxxxxxxxxxxxxxxx}}_{\sin(\alpha + \alpha')}$$
d'où $\alpha$ et $v$

Soit $\vec{h}$ un vecteur unitaire situé dans le plan de la facette et orthogonal aux vecteurs $\vec{n}$ et $\vec{v}$

$$\vec{h} = \vec{n} \wedge \vec{v}$$

Un point P de la facette est de la forme $M + v \cdot \vec{v} + h \cdot \vec{h}$

Soit $\vec{d}$ la direction des rayons émergeant de la facette et r leur direction dans la matière ($\|\vec{d}\| = \|\vec{r}\| = 1$), et soit n1 l'indice de réfraction de la matière de la lentille :

n1 $\vec{r}$ -$\vec{d}$ colinéaire à $\vec{n}$

d'où $\vec{r}$ (lois de Descartes)

Equation optique

Soit $\Omega$ le sommet de la lentille. On suppose que toutes les ondes planes issues des facettes utilisées pour les calculs passent par $\Omega$, ce qui permet de donner une base commune aux chemins optiques utilisés pour chaque facette.

Soit E le point de la face d'entrée correspondant au point P de la face de sortie, la source étant placée à l'origine du repère,

$$OE + n1\ EP + \overrightarrow{P\Omega}.\ \overrightarrow{d} = K \text{ (chemin optique, indépendant de P)}$$

posons

$$E = P - \mu\overrightarrow{r}$$

$$OE = \underbrace{K - \overrightarrow{P\Omega}.\overrightarrow{d}}_{K_p} - \mu n1$$

$$OE^2 = \left[\overrightarrow{OP} - \mu\overrightarrow{r}\right]^2 = K_p{}^2 + n1^2\,\mu^2 - 2\,K_p\,n1\,\mu$$

$$= OP^2 + \mu^2 - 2\,\overrightarrow{OP}.\overrightarrow{r}\,\mu$$

$$\text{d'où } (n1^2 - 1)\,\mu^2 + 2\,(\overrightarrow{OP}.\overrightarrow{r} - n1\,K_p)\,\mu + K_p{}^2 - OP^2 = 0$$

d'où $\mu$ et E en fonction de h et v qui constituent un paramétrage de la surface recherchée.

**Revendications**

1. Lentille (L) de module d'éclairage de projecteur de véhicule automobile comportant:

   - une face de sortie (3) à facettes (4a...6c) situées dans des plans orientés différemment,
   - une face d'entrée (E), chaque facette de sortie (4a...6c) étant associée à une surface d'entrée (E4a ...E6a) de la face d'entrée (E), la forme de chaque surface d'entrée étant telle que chaque lentille partielle formée par une facette de sortie et sa surface d'entrée associée admet un foyer (F) et transforme les surfaces d'ondes sphériques admettant ce foyer (F) pour centre en une surface d'onde de sortie plane pouvant être distincte pour chaque lentille partielle, le foyer (F) étant identique pour toutes les facettes de sortie.

2. Lentille (L) selon la revendication 1, dans laquelle le chemin optique entre le foyer (F) et la surface d'onde correspondante est identique pour chaque lentille partielle, lesdites surfaces d'onde de sortie de chacune desdites lentilles partielles passant par un même point.

3. Lentille (L) selon la revendication 2, dans laquelle la face de sortie (3) de ladite lentille (L) comporte une facette centrale (5b) orthogonale à l'axe optique du module et le point central ($\Omega$) de la facette centrale constitue le point de passage des surfaces d'onde de sortie.

4.  Lentille (L) selon l'une quelconque des revendications précédentes, dans laquelle la forme de chaque surface d'entrée (E4a ...E6a) permet d'obtenir des surfaces d'onde de sortie planes telles que l'image du foyer (F) par chaque lentille partielle se situe à l'infini et certaines de ces images du foyer (F) sont décalées horizontalement.

5.  Lentille (L) selon l'une quelconque des revendications précédentes, comprenant une facette de sortie centrale (5b), les autres facettes de sortie (4a, 4b, 4c, 5a, 5c, 6a, 6b, 6c) se répartissant autour de la facette de sortie centrale (5b), ces autres facettes de sortie étant inclinées vers l'arrière en partant de leur point le plus proche de la facette de sortie, le foyer (F) et la lentille (L) étant agencés d'arrière en avant.

6.  Lentille (L) selon la revendication 5, dans laquelle l'image du foyer (F) par une lentille partielle autre que la lentille partielle centrale est décalée par rapport à l'image du foyer par la lentille partielle centrale, selon la même direction que le décalage du vecteur de la normale à la facette de sortie (4a, 4b, 4c, 5a, 5c, 6a, 6b, 6c) de la lentille partielle correspondante par rapport au vecteur de la normale à la facette de sortie centrale (5b).

7.  Module d'éclairage de véhicule automobile comprenant une lentille (L) selon l'une quelconque des revendications précédentes.

8.  Module d'éclairage selon la revendication 7, dans lequel la forme de chaque surface d'entrée (E4a ...E6a) de la lentille (L) est telle que lesdites surfaces d'onde de sortie planes (H5a, H5b, H5c) sont contenues dans des plans verticaux.

9.  Module d'éclairage selon la revendication 7 ou 8, comprenant également une source lumineuse (S) formée par une diode électroluminescente (1) à plusieurs puces alignées suivant une direction horizontale, les puces voisines se succédant d'un pas (p) et étant séparées par des bandes verticales (2) n'émettant pas de lumière, ledit foyer (F) étant situé environ au centre de la source lumineuse (S).

10. Module d'éclairage selon la revendication 9, **caractérisé en ce que** la forme de chaque surface d'entrée (E4a ... E6a) permet d'obtenir des surfaces d'onde de sortie planes telles que l'image du foyer (F) par chaque lentille partielle correspondante se situe à l'infini et certaines des images du foyer associées à l'ensemble des lentilles partielles sont décalées, de sorte que les lentilles partielles donnent des images entrelacées (I5a, I5b, I5c) de la source lumineuse.

11. Module selon la revendication 10, **caractérisé en ce que** les images entrelacées superposées sont décalées d'une valeur donnée par la formule suivante:

$$\pm (k.p/2 - \varepsilon)$$

où :

- « p » correspond à la distance angulaire entre les centres des images à l'infini des puces par la lentille partielle centrale,
- « k » est un nombre entier et $\varepsilon < p/2$,
- $\varepsilon$ correspond à un décalage supplémentaire, pouvant varier pour des images résultant de lentilles partielles différentes.

12. Module selon l'une quelconque des revendications 9 à 11, **caractérisé en ce que** les images entrelacées (I5a, I5b, I5c) de la source lumineuses sont décalées uniquement horizontalement.

13. Module d'éclairage selon l'une quelconque des revendications 7 à 10, **caractérisé en ce que** le spot lumineux résultant de la superposition de l'ensemble des images entrelacées (I5a, I5b, I5c) de la source lumineuse (S) est un spot de faisceau route.

14. Module selon l'une quelconque des revendications 7 à 13, **caractérisé en ce qu'**il comprend un système optique situé derrière la lentille qui est replié à l'aide d'un dispositif réfléchissant (11) pour réduire l'encombrement de l'ensemble suivant la direction de l'axe optique.

**15.** Projecteur de véhicule automobile comportant au moins un module selon l'une quelconque des revendications 7 à 14.

FIG.1

FIG.2

FIG.3

FIG.4

FIG.5

FIG.6

FIG.7

FIG.8

**EP 2 237 080 A1**

Europäisches Patentamt
European Patent Office
Office européen des brevets

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 99/61945 A (REMOTE SOURCE LIGHTING INT INC [US]) 2 décembre 1999 (1999-12-02) | 1-6 | INV. G02B3/00 |
| A | * page 19, ligne 19 - page 27, ligne 3; figures 5-12,15 * ----- | 7-15 | F21S8/10 F21V5/00 F21V5/04 |
| X | US 4 264 948 A (CHEROUGE DOMINIQUE) 28 avril 1981 (1981-04-28) * colonne 1, ligne 62 - colonne 2, ligne 32; figure 1 * ----- | 1 | G02B19/00 G02B27/30 |
| A | US 2007/230190 A1 (SASAKI SATOSHI [JP]) 4 octobre 2007 (2007-10-04) * alinéas [0003], [0091], [0092]; figure 11 * ----- | 1 | |
| A | US 2008/247188 A1 (WOODWARD RONALD OWEN [US]) 9 octobre 2008 (2008-10-09) * alinéas [0019] - [0036]; figure 1 * ----- | 1 | |
| A | GB 14192 A A.D. 1912 (BRETTELL FREDERICK GILBERT) 18 juin 1913 (1913-06-18) * pages 1-2; figure 3 * ----- | 1 | DOMAINES TECHNIQUES RECHERCHES (IPC) G02B F21S F21V |

Le présent rapport a été établi pour toutes les revendications

| Lieu de la recherche | Date d'achèvement de la recherche | Examinateur |
|---|---|---|
| Munich | 29 avril 2010 | Stemmer, Michael |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

# EP 2 237 080 A1

**ANNEXE AU RAPPORT DE RECHERCHE EUROPEENNE
RELATIF A LA DEMANDE DE BREVET EUROPEEN NO.**

EP 10 15 7754

| Document brevet cité au rapport de recherche | | Date de publication | Membre(s) de la famille de brevet(s) | | Date de publication |
|---|---|---|---|---|---|
| WO 9961945 | A | 02-12-1999 | AU | 8052698 A | 13-12-1999 |
| | | | BR | 9815875 A | 05-03-2002 |
| | | | CA | 2333535 A1 | 02-12-1999 |
| | | | CN | 1303486 A | 11-07-2001 |
| | | | EP | 1082629 A1 | 14-03-2001 |
| | | | JP | 2002517014 T | 11-06-2002 |
| | | | MX | PA00013038 A | 24-04-2002 |
| US 4264948 | A | 28-04-1981 | DK | 147399 A | |
| | | | DK | 147502 A | |
| US 2007230190 | A1 | 04-10-2007 | CN | 101046281 A | 03-10-2007 |
| | | | DE | 102007015012 A1 | 24-01-2008 |
| US 2008247188 | A1 | 09-10-2008 | CA | 2682204 A1 | 16-10-2008 |
| | | | WO | 2008122110 A1 | 16-10-2008 |
| | | | EP | 2142850 A1 | 13-01-2010 |
| GB 191214192 | A | 18-06-1913 | AUCUN | | |

EPO FORM P0460

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2765312 A